# EUROPÄISCHE PATENTSCHRIFT

(11) **EP 1 535 027 B1**
(45) Veröffentlichungstag und Bekanntmachung des Hinweises auf die Patenterteilung: **09.12.2015**
(21) Anmeldenummer: 03709652.6
(22) Anmeldetag: 25.02.2003
(51) Int. Cl.: G01C 19/56, G01C 19/5712

(54) **DREHRATENSENSOR**
ROTATION SPEED SENSOR
DETECTEUR DE VITESSES DE ROTATION

(30) Priorität: 24.08.2002 DE 10238893
(43) Veröffentlichungstag der Anmeldung: 01.06.2005
(73) Patentinhaber: ROBERT BOSCH GMBH, 70442 Stuttgart (DE)
(72) Erfinder: MAURER, Dieter, 72793 Pfullingen (DE); HAUER, Joerg, 71762 Reutlingen (DE)
(86) Internationale Anmeldenummer: PCT/DE2003/000590
(87) Internationale Veröffentlichungsnummer: WO 2004/020947

(56) Entgegenhaltungen:
- WO-A-96/35957
- DE-A- 19 945 859
- US-A- 5 313 835

## Beschreibung

### Stand der Technik

Die Erfindung geht aus von einem Drehratensensor nach der Gattung des Hauptanspruchs. Aus der DE 19945859 ist bereits ein Drehratensensor bekannt, bei dem jedoch die Arbeitsfrequenz des Drehratensensors relativ gering ist. Die WO 96/35957 beschreibt einen Drehratensensor mit den Merkmalen des Oberbegriffs des Hauptanspruchs.

### Vorteile der Erfindung

Beim Drehratensensor gemäß dem Stand der Technik, welcher einen in Oberflächenmikromechanik gefertigten Rotationsschwinger aufweist, ist es so, dass der Rotationsschwinger bzw. auch die Schwungmasse mechanisch über eine X-förmig vorgesehene Feder in der Mitte an einem Punkt mit dem Substrat verbunden ist. Hierbei stellt sich, ausgehend von der X-förmig vorgesehenen Feder und der Masse des Rotationsschwingers, eine Arbeitsfrequenz ein. Um die Arbeitsfrequenz gegenüber dem Drehratensensor aus dem Stand der Technik zu vergrößern, müssten entweder die Federarme der X-förmig vorgesehenen Feder verbreitert werden, oder aber es müssten die X-förmig vorgesehenen Federarme verkürzt werden. Eine Kombination aus beiden Maßnahmen ist selbstverständlich ebenso denkbar. Bei diesen Maßnahmen würde jedoch das Problem auftreten, dass zum einen die Schwingamplitude verkleinert werden würde und zum anderen die Dehnungen des Federmaterials vergrößert werden würden. Die Verkleinerung der Schwingamplitude verringert die Empfindlichkeit des Sensors, was nachteilig ist. Die Erhöhung der Dehnungen am Material der X-förmig vorgesehenen Feder kann dazu führen, dass das Federmaterial bricht. Weiterhin ist es so, dass die Nichtlinearität der Federsteifigkeit über der Auslenkung zunimmt, wenn die Federlänge bei gleichbleibender Schwingungsamplitude verkürzt wird. Die Nichtlinearität sollte für einen stabilen Betrieb des Sensors so klein wie möglich gehalten werden, da sonst die Gefahr eines nichtlinearen Kollapses besteht (zwei stabile Arbeitspunkte). Der erfindungsgemäße Drehratensensor mit den Merkmalen des Hauptanspruchs hat dem gegenüber den Vorteil, dass die Nachteile des Standes der Technik, die sich aus Maßnahmen zur Erhöhung der Schwingungsfrequenz ergeben, nicht auftreten. Im Vergleich zum Stand der Technik weist die Biegefedereinrichtung des erfindungsgemäßen Drehratensensors erheblich kleinere maximale Dehnungen an der Einspannung bei einer vorgegebenen Auslenkung auf. Weiterhin lassen sich die maximalen Dehnungen durch die Größe des Radius an der Einspannung wählen. Ein großer Radius bedeutet hier eine kleine Dehnung an der Einspannung.

Durch den in den Unteransprüchen aufgeführten Maßnahmen sind vorteilhafte Weiterbildungen und Verbesserungen des im Hauptanspruch angegebenen Drehratensensors möglich.

Besonders vorteilhaft ist, dass die Biegefedereinrichtung derart mit der Schwungmasse verbunden ist, dass ein radialer Längenausgleich möglich ist. Zur Erzielung des radialen Längenausgleiches ist es insbesondere vorgesehen, dass die Biegefedereinrichtung an ihrer Verbindung zur Schwungmasse an einen abgeknickten Bereich aufweist. Hierdurch ist es möglich, bei der Drehung des Sensor in der Ebene die Längskraft in den Biegefedereinrichtungen durch die abgewinkelten Endstücke bzw. durch den abgeknickten Bereich aufzunehmen. Wird diese Längskraft in der Biegefedereinrichtung nicht abgebaut, so nimmt die Steifigkeit als Funktion der Auslenkung wiederum zu, was zur Folge hat, dass die Nichtlinearität der Federsteifigkeit groß wird. Dies ist erfindungsgemäß zu vermeiden, weshalb der radiale Längenausgleich auch eine Verringerung der Nichtlinearität der Federsteifigkeit zur Folge hat. Weiterhin ist es vorteilhaft, dass zwei Biegefedereinrichtungen spiegelsymmetrisch entlang ihrer größten Ausdehnung nebeneinander vorgesehen sind und zusammen eine Biegefeder bilden. Hierdurch ist gewährleistet, dass eine Biegefeder für Auslenkungen in verschiedene Richtungen, ausgehend von ihrer Ruhelage, eine symmetrische Charakteristik aufweist. Beispielsweise ist die Auslenkung und Rückstellkraft bei einer Drehung der Schwungmasse um einen Winkel um die Z-Achse in positiver und negativer Richtung jeweils gleich. Weiterhin ist von Vorteil, dass zwei Biegefedern V-förmig derart angeordnet sind, dass die Schenkel zur Schwungmasse hin unter einem Öffnungswinkel aufgespreizt sind. Durch das Ändern des Öffnungswinkels zwischen den Biegefedern kann die Detektionsresonanzfrequenz des Sensors, das heißt die Drehung der Schwungmasse aus der Substratebene heraus um die X- bzw. Y-Achse herum, eingestellt werden. Das Verhältnis der Eigenfrequenzen zueinander bestimmt in erheblichem Maße die Sensoreigenschaften, wie zum Beispiel Empfindlichkeit, Störsicherheit und Temperaturstabilität. Über den Öffnungswinkel der Biegefedern ist es damit möglich, die Eigenfrequenzen einfach und genau und unabhängig voneinander abstimmbar vorzusehen. Weiterhin ist es vorteilhaft, dass insgesamt vier Biegefedern derart angeordnet sind, dass sie im Wesentlichen eine X-Form bilden. Dies schafft eine symmetrische Biegefederform. Weiterhin ist von Vorteil, dass der Öffnungswinkel derart gewählt ist, dass die Eigenfrequenz um die senkrecht zur Substratoberfläche liegende Drehachse geringer ist, als jede Eigenfrequenz um eine parallel zur Substratoberfläche liegende Drehachse. Dadurch lässt sich ein außerordentlich positives Erfassungsverhalten erreichen. Weiterhin ist von Vorteil, dass der erfindungsgemäße Drehratensensor in Oberflächenmikromechanik oder in einer anderen Mikromechaniktechnologie hergestellt ist. Die Anwendung der Oberflächenmikromechanik zur Herstellung des erfindungsgemäßen mikromechanischen Drehratensensors, speziell ein Serienherstellungsprozess mit einer dicken EP-Poly-Schicht von typischer Weise 10 µm Dicke, erlaubt die Bildung einer steifen Sensorstruktur, die eine geringe Querempfindlichkeit erreichen lässt. Weiterhin ist von Vorteil, dass die Verankerungseinrichtung fest mit dem Substrat verbunden ist, oder dass die Verankerungseinrichtung beweglich relativ zum Substrat angeordnet ist. Hierdurch lassen sich verschiedene Anwendungen des erfindungsgemäßen Drehratensensors ermöglichen. Weiterhin ist von Vorteil, dass zusätzlich zu den eine X-Form bildenden, Biegefedern noch eine oder mehrere Stützfedern vorgesehen sind. Dies ist zur gezielten Beeinflussung anderer Eigenfrequenzen des Sensors erfindungsgemäß in einer weiteren Ausführungsform des Sensors vorteilhaft vorgesehen.

### Zeichnungen

Ausführungsbeispiele der Erfindung sind in der Zeichnung dargestellt und in der nachfolgenden Beschreibung näher erläutert.

Es zeigen:
Figur 1: Eine perspektivische Darstellung eines herkömmlichen Drehratensensors gemäß des Standes der Technik,
Figur 2: einen Ausschnitt aus einer Draufsicht des Zentrums einer erfindungsgemäßen Sensoranordnung,
Figur 3: eine Darstellung des unterschiedlichen Linearitätsverhaltens verschiedener Federeinrichtungen
Figur 4: eine Detaildarstellung einer Biegefeder und
Figur 5: eine weitere Ausführungsform des erfindungsgemäßen Drehratensensors.

### Beschreibung der Ausführungsbeispiele

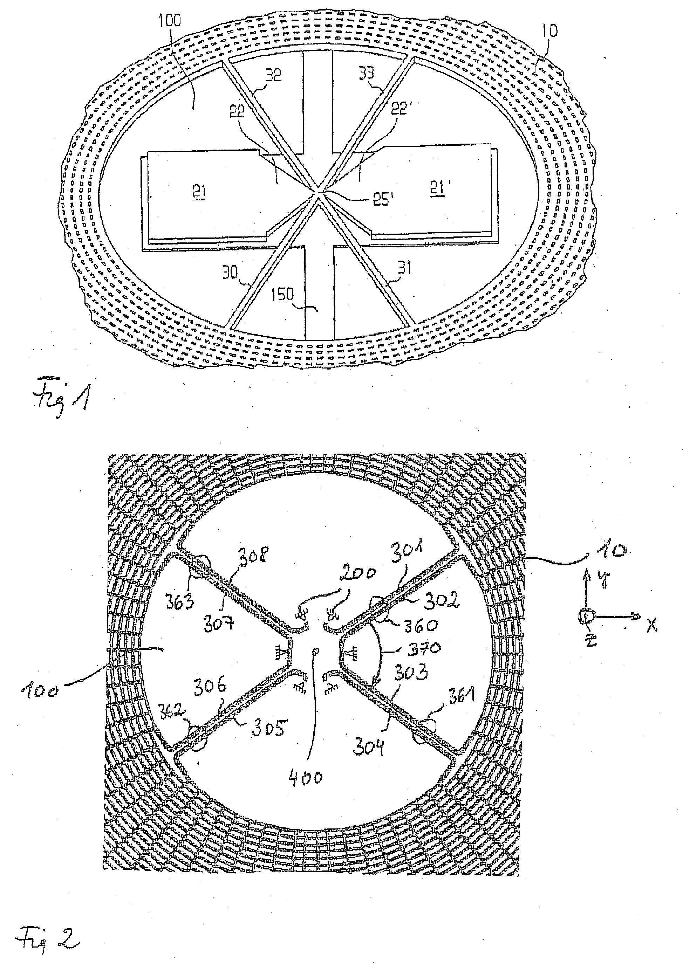

In Figur 1 ist eine perspektivische Darstellung eines herkömmlichen Drehratensensors gemäß dem Stand der Technik dargestellt. In Figur 1 bezeichnen 100 ein Substrat in Form eines Siliciumwafers. 10 bezeichnet eine ringförmige Schwungmasse; 25'eine Brücke und 30-33 Biegefederschenkel zweier V-förmiger Biegefedern. Mit 21, 21' ist ein Sockel und mit 150 ist eine elektrische Zuleitung bezeichnet. Der Sockel 21, 21' weist zu der Brücke 25' hin jeweils eine keilförmige Verjüngung auf, welche mit den Bezugszeichen 22, 22'-bezeichnet ist. Bei dem in Figur 1 dargestellten herkömmlichen Drehratensensor gemäß dem Stand der Technik ist eine in Oberflächenmikromechanik gefertigte Schwungmasse 10, welche im Folgenden auch als Rotationsschwinger 10 bezeichnet wird, vorgesehen, die mechanisch über eine X-förmige Feder, bestehend aus den Biegefederschenkeln 30-33 in der Mitte der Anordnung an einem Punkt mit dem Substrat 100 verbunden ist, vorgesehen. Die Arbeitsfrequenz der angetriebenen Rotationsschwingung des Sensors beträgt beispielhaft 1,5 kHz. Ausgehend von diesem Stand der Technik ist es erfindungsgemäß vorgesehen, einen Sensor mit einer höheren Arbeitsfrequenz, beispielsweise größer als 5 kHz, vorzusehen. Hierbei soll die Struktur der Schwungmasse 10 weitgehend unverändert bleiben. Hierzu müssten bei einem Sensor gemäß dem Stand der Technik die X-förmig verlaufenden Biegefederschenkel 30-33 entweder verkürzt und/oder verbreitert werden. Hierbei treten vielerlei Probleme auf. Zum einen würde durch diese Maßnahmen der Verkleinerung und/oder Verbreiterung der Biegefederschenkel 30-33 die Empfindlichkeit des Sensors herabgesetzt werden. Dies kann nicht erwünscht sein, weil generell Sensoren mit einer hohen Empfindlichkeit erwünscht sind. Weiterhin ist es so, dass bei einer breiteren Feder die Dehnungen an der Einspannung der X-Feder, wie sie in Figur 1 dargestellt ist, derart groß werden, dass bei maximaler Auslenkung der Drehschwingung der Schwungmasse 10 die Dauerfestigkeitsgrenze des Federmaterials erreicht werden kann. Dies ist beispielsweise der Fall für die Verwendung von Polysilicium als Federmaterial. Außerdem würde sich bei dem angegebenen Szenario die Nichtlinearität der Federsteifigkeit über der Auslenkung der X-Feder vergrößern, wenn die Federlänge bei gleichbleibender Schwingungsamplitude verkürzt wird. Es ist jedoch so, dass die Nichtlinearität für einen stabilen Betrieb des Sensors so klein wie möglich gehalten werden muss, da sonst die Möglichkeit bzw. die Gefahr eines nichtlinearen Kollapses besteht. Erfindungsgemäß war es daher notwendig, eine Feder zu finden, welche die oben genannten Nachteile des Standes der Technik nicht oder in erheblich kleinerem Maße aufweist. Weiterhin sollten aber die Vorteile der X-Feder, wie beispielsweise die gezielte Einstellbarkeit der Resonanzfrequenzen um die unterschiedlichen Schwingungsachsen herum, nicht verloren gehen.

In Figur 2 ist ein Ausschnitt der Sensormitte eines erfindungsgemäßen Drehratensensors dargestellt. Gleiche Bezugszeichen aus der Figur 2 bezeichnen gleiche Teile bzw. Komponenten der Struktur. So bezeichnet 10 die Schwungmasse bzw. den Rotationsschwinger. 100 bezeichnet das Substrat, welches auch erfindungsgemäß insbesondere als Siliciumsubstrat vorgesehen ist. Weiterhin sind in Figur 2 Verankerungseinrichtungen 200 dargestellt, die mit dem einen Ende einer ersten Biegefedereinrichtung 301 verbunden ist. Die erste Biegefedereinrichtung 301 ist mit ihrem anderen Ende mit der Schwungmasse 10 verbunden. Ebenso ist eine zweite Biegefedereinrichtung 302 vorgesehen, die ebenfalls die Verankerungseinrichtung 200 mit der Schwungmasse 10 verbindet. Weiterhin sind dritte bis achte Biegefedereinrichtungen 303-308 vorgesehen, die ebenso zwischen der Verankerungseinrichtung 200 und der Schwungmasse 10 vorgesehen sind. Die Verankerungseinrichtung 200 ist daher insbesondere derart vorgesehen, dass sie eine andere Stelle der Verankerung für jede Biegefeder der Einrichtungen 301-308 vorsieht. Die Biegefedereinrichtungen 301-308 sowie die Verankerungseinrichtung 200 und die Schwungmasse 10 sind erfindungsgemäß insbesondere aus Polysilicium über eine Siliciumoxidschicht hergestellt, wobei die Siliciumoxidschicht später im Verfahren durch Unterätzen entfernt wird, um die beweglichen Teile gegenüber dem Substrat 100 auslenkbar zu gestalten. Die Verankerungseinrichtung 200 ist erfindungsgemäß in einem speziellen Ausführungsbeispiel über die Siliciumoxidschicht mit dem Substrat 100 verbunden bzw. auf diesem verankert und bildet Fixpunkte der Sensorstruktur. In einer anderen Ausführungsform der Erfindung ist es vorgesehen, dass die Biegefedereinrichtungen 301-308 mit einer beweglich vorgesehenen Verankerungseinrichtung 200 verbunden sind, so dass die Verankerungseinrichtung 200 in diesem Fall nicht starr mit dem Substrat 100 fixiert vorgesehen ist. Die Erfindung wird jedoch nachfolgend anhand eines Ausführungsbeispiels beschrieben, bei dem die Verankerungseinrichtung 200 starr mit dem Substrat 100 verbunden ist.

Die Biegefedereinrichtungen 301-308 sind erfindungsgemäß insbesondere derart angeordnet, dass die erste Biegefedereinrichtung 301 und die zweite Biegefedereinrichtung 202 symmetrisch und zwar spiegelsymmetrisch entlang einer in Figur 2 nicht dargestellten Achse angeordnet sind und zusammen eine erste Biegefeder 360 bilden. Weiterhin bilden die dritte und die vierte Biegefedereinrichtung 303 und 304 in entsprechender Weise eine zweite Biegefeder 361. Weiterhin bilden die fünfte und die sechste Biegefedereinrichtung 305, 306 gemeinsam eine dritte Biegefeder 362 und die siebte und achte Biegefedereinrichtung 307, 308 bilden zusammen eine vierte Biegefeder 363. Wie bereits beschrieben, ist die Schwungmasse 10 erfindungsgemäß insbesondere ringförmig vorgesehen und zwar zentriert um ein Zentrum 400 herum. Hierbei bildet das Substrat 100 eine Hauptsubstratebene, in welcher sich die Schwungmasse 10 hauptsächlich erstreckt. In der Hauptsubstratebene liegen die beiden, im rechten Teil der Figur 2 dargestellten Richtungen X und Y, wobei die X-Richtung in der Zeichenebene horizontal von links nach rechts weist und die Y-Richtung in der Zeichenebene von unten nach oben weist. Die Z-Richtung ist senkrecht zur Zeichenebene und zur Hauptsubstratebene vorgesehen und weist aus der Zeichenebene heraus zum Betrachter. Das Zentrum 400 ist das Zentrum der Drehschwingung der Schwungmasse 10 um eine Achse, die in Z-Richtung verläuft und das Substrat 100 im Zentrum 400 schneidet. Die erste Biegefeder 360 und die zweite Biegefeder 361 bilden zusammen im Wesentlichen zwei Schenkel, welche V-förmig derart angeordnet sind, dass die Schenkel zur Schwungmasse 10 hin unter einem mit dem Bezugszeichen 370 bezeichneten Öffnungswinkel aufgespreizt sind. Die dritte und vierte Biegefeder 362, 363 bilden ebenfalls V-förmig angeordnete Schenkel und sind erfindungsgemäß insbesondere im gleichen Öffnungswinkel 370 spiegelsymmetrisch zu der ersten und zweiten Biegefeder 360, 361 angeordnet, so dass die vier Biegefedern 360-363 zusammen im Wesentlichen eine X-fömige Anordnung aufweisen.

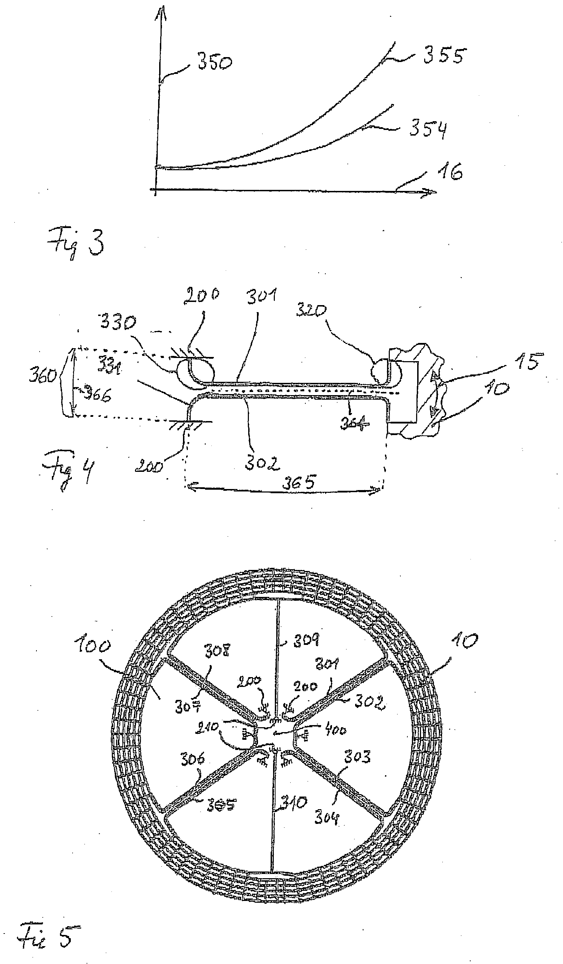

In Figur 3 ist eine Darstellung der Linearitätseigenschaften einer gedachten ersten Federeinrichtung 354 und einer gedachten zweiten Federeinrichtung 355 dargestellt. In Figur 3 ist das Schaubild der Steifigkeit 350 der Federeinrichtung 354, 355 über der Amplitude 16 dargestellt. Für das Beispiel einer Biegefeder als Federeinrichtung 354, 355 entspricht die Schwingungsamplitude bzw. die Auslenkung 16 in Figur 3 beispielsweise der Auslenkung eines freien Endes einer eingespannten Biegefeder im Vergleich zu ihrer Ruhelage. Bei ansonsten gleichen Abmessungen würde im dargestellten Beispiel der zweiten Federeinrichtung 355 eine kleinere Länge der Biegefeder und der ersten Federeinrichtung 354 eine größere Länge der Biegefeder entsprechen, wenn das gleiche Material vorliegt. Die Steifigkeit 350 ist damit, bei einer von Null verschiedenen Auslenkung 16, für die kleinere Federlänge der zweiten Federeinrichtung 355 größer als für die größere Federlänge der ersten Federeinrichtung 354. Dies hat zur Folge, dass bei der zweiten Federeinrichtung 355 bei gleicher Schwingungsamplitude 16 ein größerer, nichtlinearer Anteil zu berücksichtigen ist. Dies ist zur Herstellung eines Drehratensensors zu vermeiden, so dass der nichtlineare Anteil hierbei möglichst gering gehalten werden soll.

In Figur 4 ist eine detailiertere und vergrößerte Darstellung der ersten Biegefeder 360 dargestellt. Erkennbar ist auf der linken Seite der Figur 4 die Verankerungseinrichtung 200, mit der ein erstes Ende 330 der ersten Biegefedereinrichtung 301 verbunden ist. Mit einem zweiten Ende 320 der ersten Biegefedereinrichtung 301 ist diese mit der Schwungmasse 10 verbunden. Bei der Ausführung von Drehschwingungen der Schwungmasse 10 um das Zentrum 400, welches in Figur 4 jedoch nicht dargestellt ist, kommt es zu einer durch einen Doppelpfeil dargestellten Bewegung, wobei der Doppelpfeil mit dem Bezugszeichen 15 versehen ist. Je größer die Wegstrecke ist, welche die Schwungmasse 10 bei der Bewegung 15 zurücldegt, desto größer ist die Schwingamplitude, welche in Figur 3 mit dem Bezugszeichen 16 dargestellt wurde. Außer der ersten Biegefedereinrichtung 301 umfasst die erste Biegefeder 360 noch die zweite Biegefedereinrichtung 302, wobei die erste und zweite Biegefedereinrichtung 301, 302 entlang der in Figur 4 mit dem Bezugszeichen 364 bezeichneten Symmetrieebene spiegelsymmetrisch zueinander angeordnet sind. Auch die zweite Biegefedereinrichtung 302 weist selbstverständlich ein erstes und ein zweites Ende auf, wobei diese jedoch in Figur 4 nicht mit einem eigenen Bezugszeichen bezeichnet sind. Im Bereich des ersten Endes 330 weist die erste Biegefedereinrichtung 301 eine Krümmung auf, deren Radius am Beispiel der zweiten Biegefedereinrichtung 302 mit dem Bezugszeichen 331 dargestellt ist. Dies führt dazu, dass die maximalen Dehnungen an der Einspannungsstelle der ersten Biegefedereinrichtung 301 zur Verankerungseinrichtung 200 bei einer Auslenkung der ersten Biegefedereinrichtung 301 erheblich kleiner sind als bei dem herkömmlichen Drehratensensor gemäß dem Stand der Technik. Darüber hinaus lassen sich die maximalen Dehnungen an der Einspannung zur Verankerungseinrichtung 200 durch die Größe des Radius 331 variieren. Ein großer Radius 331 bedeutet hierbei, dass bei ansonsten gleichen Bedingungen und insbesondere gleichen Schwingungsamplituden kleinere Dehnungen an der Einspannung auftreten. Durch die Vorsehung jeweils zweier Biegefedereinrichtungen zur Bildung einer Biegefeder kann damit die gleiche Steifigkeit der Biegefeder 360 erreicht werden, wie bei einer wesentlich breiter ausgelegten Feder, die einstückig ausgeführt ist. Im Bereich des zweiten Endes 320 der ersten Biegefedereinrichtung 301 ist, wie in Figur 4 dargestellt, ein abgewinkelter bzw. ein abgeknickter Bereich vorgesehen. Durch diesen abgewinkelten Bereich bzw. durch diese abgewinkelten Endstücke im Bereich des zweiten Endes 320 der Biegefedereinrichtung 301 ist es möglich, dass bei einer Drehung der Schwungmasse 10 in der XY-Ebene von der Biegefedereinrichtung 301 eine Längskraft aufgenommen wird. Würde diese Längshaft in der ersten Biegefedereinrichtung 301 nicht durch den abgeknickten Bereich aufgenommen werden, so würde die Steifigkeit über der Auslenkung stark zunehmen und somit die Nichtlinearität der Federsteifigkeit vergrößert werden. Dies wird durch die Abknickung am zweiten Ende 320 der ersten Biegefedereinrichtung 301 vermieden. Dadurch ist es möglich, eine Biegefeder 360 zu bilden, welche für größere Arbeitsfrequenzen des Sensors vorgesehen ist, welche also dieselben Eigenschaften wie eine Feder mit einer größeren Federbreite bzw. mit einer kleineren Federlänge als bei der in der Figur 1 gemäß dem herkömmlichen Sensor dargestellten X-Feder hat. Durch die insgesamt aufgrund der doppelten Anordnung jeder Biegefedereinrichtungen 301-308 simulierte größere Federbreite und dadurch höhere Steifigkeit der Feder erreicht man darüber hinaus den weiteren Vorteil, dass bei der Fertigung einer solchen erfindungsgemäßen Struktur, bei welcher Fertigungsschwankungen in der Federbreite auftreten, die relative Streuung der Federbreite von Sensor zu Sensor und damit auch die Streuung der Resonanzfrequenz der Schwungmasse 10 relativ geringer wird, weil bei gleicher Breitenschwankung in der Fertigung eine größere absolute Federbreite vorliegt und so die relative Schwankung der Resonanzfrequenz geringer ist.

Der abgeknickte Bereich der ersten Biegefedereinrichtung 301 am zweiten Ende 320 der ersten Biegefedereinrichtung 301 und die Krümmung 331 am ersten Ende 330 der ersten Biegefedereinrichtung 301 sind erfindungsgemäß insbesondere in der XY-Ebene, das heißt in der Hauptsubstratebene, in der gleichen Richtung von der Spiegelungsachse 364 aus gesehen vorgesehen. Hierdurch ergibt sich eine U-Form der Biegefedereinrichtungen 301-308. Erfindungsgemäß ist es vorgesehen, dass die in Figur 4 mit dem Bezugszeichen 365 bezeichnete Länge der ersten Biegefedereinrichtung 301 erheblich größer ist, als die Breite 366 einer Biegefeder 360. Durch einen großen Einspannradius 331 im Bereich des ersten Endes 330 der ersten Biegefedereinrichtung 301 lässt sich die mechanische Belastung durch die Schwingung auf die Verbindungsstelle zur Verankerungseinrichtung 200 reduzieren.

Ein Aufhängepunkt einer Biegefedereinrichtung 301-308 an der Verankerungseinrichtung 200 muss nicht unbedingt mit dem Substrat 100 verbunden sein. Die Biegefedereinrichtung 341-308 könnte sich auch z.B. zwischen zwei sich relativ zueinander bewegenden Massen befinden.

Zusätzlich zu der in Figur 2 beschriebenen X-förmigen Anordnung der Biegefedern 360-363 können auch noch andere Federelemente integriert sein. Dies ist in Figur 5 dargestellt. Figur 5 stellt im Wesentlichen die gleiche Anordnung hinsichtlich der Schwungmasse 10, des Substrats 100, der Biegefedereinrichtungen 301-308 und der Verankerungseinrichtung 200 wie in Figur 2 auf. Darüber hinaus ist jedoch eine weitere Verankerungseinrichtung 210 vorgesehen, mit der eine erste Stützfeder 309 oder eine zweite Stützfeder 310 verbunden sind, wobei die Stützfedern 309, 310 ihrerseits mit der Schwungmasse 10 verbunden sind. Die erste Stützfeder 309 ist bezüglich des Zentrums 400 der Sensoranordnung gegenüberliegend der zweiten Stützfeder 310 vorgesehen. Weiterhin ist die weitere Verankerungseinrichtung 210 zur Verankerung der Stützfedern 309, 310 in unmittelbarer Nähe der Verankerungs einrichtung 200 in der Nähe des Zentrums 400 vorgesehen. Die Stützfedern 309, 310 dienen erfindungsgemäß insbesondere zur gezielten Beeinflussung von bestimmten Eigenfrequenzen des Sensors, die über die Biegefedern 360, 363 nicht oder nur unzureichend beeinflussbar sind.

## Patentansprüche

1. Mikromechanischer Drehratensensor mit einem Substrat (100), welches eine auf dem Substrat (100) vorgesehene Verankerungseinrichtung (200) aufweist und einer Schwungmasse (10), die über mit der Schwungmasse (10) verbundene Biegefedereinrichtungen (301-308) derart mit der Verankerungseinrichtung (200) verbunden ist, dass die Schwungmasse (10) um eine senkrecht zur Substratoberfläche liegende Drehachse (Z) elastisch aus ihrer Ruhelage auslenkbar und zu einer Drehschwingung befähigt ist,
wobei zwei Biegefedereinrichtungen (301-308) spiegelsymmetrisch entlang ihrer größten Ausdehnung nebeneinander vorgesehen sind und zusammen eine Biegefeder (360-363) bilden und
zwei Biegefedern (360-363) V-förmig derart angeordnet sind, dass die Schenkel zur Schwungmasse (10) hin unter einem Öffnungswinkel (370) aufgespreizt sind, wobei die Biegefedereinrichtungen (301-308) jeweils mit einem Ende (330) mit der Verankerungseinrichtung (200) verbunden sind und im Bereich des einen Endes (330) jeweils eine Krümmung (331) aufweisen,
**dadurch gekennzeichnet, dass**
die Krümmung (331) derart ausgebildet ist, dass der Abstand zwischen den zwei Biegefedereinrichtungen (301-308) im Bereich des einen Endes (330) in Richtung der Verankerungseinrichtung (200) zunimmt.

2. Drehratensensor nach Anspruch 1, **dadurch gekennzeichnet, dass** die Biegefedereinrichtung (301-308) derart mit der Schwungmasse (10) verbunden ist, dass ein radialer Längenausgleich möglich ist.

3. Drehratensensor nach Anspruch 1 oder 2, **dadurch gekennzeichnet, dass** die Biegefedereinrichtung (301-308) an ihrer Verbindung zur Schwungmasse (10) einen abgeknickten Bereich aufweist.

4. Drehratensensor nach einem der vorhergehenden Ansprüche, **dadurch gekennzeichnet, dass** der Verankerungsbereich der Biegefedereinrichtung (301-308) außerhalb des Zentrums (400) der Drehschwingung vorgesehen ist.

5. Drehratensensor nach einem der vorhergehenden Ansprüche, **dadurch gekennzeichnet, dass** insgesamt vier Biegefedern (360-363) derart angeordnet sind, dass sie im Wesentlichen eine X-Form bilden.

6. Drehratensensor nach einem der vorhergehenden Ansprüche, **dadurch gekennzeichnet, dass** der Öffnungswinkel (370) derart gewählt ist, dass die Eigenfrequenz um die senkrecht zur Substratoberfläche liegende Drehachse (Z) geringer ist als jede Eigenfrequenz um eine parallel zur Substratoberfläche liegende Drehachse (X, Y).

7. Drehratensensor nach einem der vorhergehenden Ansprüche, **dadurch gekennzeichnet, dass** er durch Silicium-Oberflächenmikromechanik oder eine andere Mikromechanik-Technologie hergestellt ist.

8. Drehratensensor nach einem der vorhergehenden Ansprüche, **dadurch gekennzeichnet, dass** die Verankerungseinrichtung (200) fest mit dem Substrat (100) verbunden ist oder dass die Verankerungseinrichtung (200) relativ zum Substrat (100) beweglich angeordnet ist.

9. Drehratensensor nach einem der vorhergehenden Ansprüche, **dadurch gekennzeichnet, dass** zusätzlich zu den eine X-Form bildenden Biegefedern (360, 363) noch eine oder mehrere Stützfedern (309, 310) vorgesehen sind.

## Claims

1. Micromechanical rate-of-rotation sensor having a substrate (100), which has an anchoring device (200) provided on the substrate (100) and a gyrating mass (10), which is connected to the anchoring device (200) by flexible spring devices (301-308) connected to the gyrating mass (10) in such a way that the gyrating mass (10) can be deflected resiliently out of its rest position about an axis of rotation (Z) lying perpendicular to the substrate surface and is capable of a rotational oscillation,
two flexible spring devices (301-308) being provided beside each other with mirror-symmetry along their greatest extent and together forming a flexible spring (360-363), and
two flexible springs (360-363) being arranged in a V shape in such a way that the legs are spread apart towards the gyrating mass (10) at an opening angle (370),
the flexible spring devices (301-308) each being connected by one end (330) to the anchoring device (200) and each having a curve (331) in the region of the one end (330),
**characterized in that**
the curve (331) is formed in such a way that the distance between the two flexible spring devices (301-308) in the region of the one end (330) increases in the direction of the anchoring device (200).

2. Rate-of-rotation sensor according to Claim 1, **characterized in that** the flexible spring device (301-308) is connected to the gyrating mass (10) in such a way that radial length compensation is possible.

3. Rate-of-rotation sensor according to Claim 1 or 2, **characterized in that** the flexible spring device (301-308) has a bent-over area at its connection to the gyrating mass (10).

4. Rate-of-rotation sensor according to one of the preceding claims, **characterized in that** the anchoring region of the flexible spring device (301-308) is provided outside the centre (400) of the rotational oscillation.

5. Rate-of-rotation sensor according to one of the preceding claims, **characterized in that** a total of four flexible springs (360-363) are arranged in such a way that they substantially form an X shape.

6. Rate-of-rotation sensor according to one of the preceding claims, **characterized in that** the opening angle (370) is chosen in such a way that the natural frequency about the axis of rotation (Z) lying perpendicular to the substrate surface is lower than each natural frequency about an axis of rotation (X, Y) lying parallel to the substrate surface.

7. Rate-of-rotation sensor according to one of the preceding claims, **characterized in that** it is produced by silicon surface micro-mechanics or another micromechanical technology.

8. Rate-of-rotation sensor according to one of the preceding claims, **characterized in that** the anchoring device (200) is connected firmly to the substrate (100) or **in that** the anchoring device (200) is arranged to be movable relative to the substrate (100).

9. Rate-of-rotation sensor according to one of the preceding claims, **characterized in that**, in addition to the flexible springs (360, 363) forming an X shape, one or more supporting springs (309, 310) are also provided.

## Revendications

1. Capteur micromécanique de vitesse de rotation avec un substrat (100), lequel comporte un dispositif d'ancrage (200) prévu sur le substrat (100) et avec une masse d'inertie (10), qui par l'intermédiaire de dispositifs de ressort de flexion (301 à 308) reliés avec la masse d'inertie (10) est relié avec le dispositif d'ancrage (200) de telle sorte que la masse d'inertie (10) soit susceptible de dévier élastiquement de sa position de repos autour d'un axe de rotation (Z) situé à la perpendiculaire de la surface du substrat et soit apte à une oscillation rotative,
deux dispositifs de ressort de flexion (301 à 308) étant prévus côte à côte en symétrie spéculaire le long de leur plus grande extension et formant ensemble un ressort de flexion (360 à 363) et
deux ressorts de flexion (360 à 363) étant placés en forme de V de telle sorte que les branches soient écartées sous un angle d'ouverture (370) en direction de la masse d'inertie (10),
les dispositifs de ressort de flexion (301 à 308) étant reliés chaque fois par une extrémité (330) avec le dispositif d'ancrage (200) et dans la région de l'une extrémité (330) comportant chaque fois une courbure (331),
**caractérisé en ce que**
la courbure (331) est conçue de telle sorte que l'écart entre les deux dispositifs de ressort de flexion (301 à 308) dans la région de l'une extrémité (330) augmente en direction du dispositif d'ancrage (200).

2. Capteur de vitesse de rotation selon la revendication 1, **caractérisé en ce que** le dispositif de ressort de flexion (301 à 308) est relié avec la masse d'inertie (10) de telle sorte qu'une compensation en longueur radiale soit possible.

3. Capteur de vitesse de rotation selon la revendication 1 ou la revendication 2, **caractérisé en ce que** sur sa liaison avec la masse d'inertie (10), le dispositif de ressort de flexion (301 à 308) comporte une région coudée.

4. Capteur de vitesse de rotation selon l'une quelconque des revendications précédentes, **caractérisé en ce que** la région d'ancrage du dispositif de ressort de flexion (301 à 308) est prévue à l'extérieur du centre (400) de l'oscillation rotative.

5. Capteur de vitesse de rotation selon l'une quelconque des revendications précédentes, **caractérisé en ce qu'**au total quatre ressorts de flexion (360 à 363) sont placés de telle sorte qu'ils forment sensiblement un X.

6. Capteur de vitesse de rotation selon l'une quelconque des revendications précédentes, **caractérisé en ce que** l'angle d'ouverture (370) est choisi de telle sorte que la fréquence propre autour de l'axe de rotation (Z) situé à la perpendiculaire de la surface du substrat soit inférieure à la fréquence propre autour d'un axe de rotation (X, Y) situé à la parallèle de la surface du substrat.

7. Capteur de vitesse de rotation selon l'une quelconque des revendications précédentes, **caractérisé en ce qu'**il est fabriqué par micromécanique superficielle au silicium ou par une autre technologie micromécanique.

8. Capteur de vitesse de rotation selon l'une quelconque des revendications précédentes, **caractérisé en ce que** le dispositif d'ancrage (200) est fixement relié avec le substrat (100) ou en ce que le dispositif d'ancrage (200) est placé en étant mobile par rapport au substrat (100).

9. Capteur de vitesse de rotation selon l'une quelconque des revendications précédentes, **caractérisé en ce qu'**en supplément des ressorts de flexion (360, 363) formant un X, il est encore prévu un ou plusieurs ressorts de soutien (309, 310).
